# EUROPÄISCHE PATENTSCHRIFT

(11) **EP 2 674 410 B1**
(45) Veröffentlichungstag und Bekanntmachung des Hinweises auf die Patenterteilung: **20.01.2021**
(21) Anmeldenummer: 13172150.8
(22) Anmeldetag: 14.06.2013
(51) Int. Cl.: C04B 41/65, E01C 5/06, C04B 28/00, C04B 41/45, C04B 41/48, C04B 41/50, C04B 41/52, B82Y 30/00, C04B 28/02, C04B 41/00, C04B 41/61, C04B 111/00, C04B 111/80

(54) **Infrarot reflektierendes Betonprodukt**
Infrared reflective concrete product
Produit en béton réfléchissant les infrarouges

(30) Priorität: 15.06.2012 DE 102012105226
(43) Veröffentlichungstag der Anmeldung: 18.12.2013
(73) Patentinhaber: Lithonplus GmbH & Co. KG, 67360 Lingenfeld (DE)
(72) Erfinder: Brunkhorst, Andreas, 71642 Ludwigsburg (DE)
(74) Vertreter: Spachmann, Holger

(56) Entgegenhaltungen:
- EP-A1- 2 233 456
- WO-A1-2007/106268
- DE-T2- 69 718 080
- DE-U1-202008 001 836
- KR-A- 20060 111 938
- DATABASE WPI Week 200305 Thomson Scientific, London, GB; AN 2003-050422 XP002736385, -& JP 2002 274965 A (ISHIKAWAJIMA HARIMA HEAVY IND) 25. September 2002 (2002-09-25)

## Beschreibung

### STAND DER TECHNIK

Die Erfindung betrifft ein Infrarot reflektierendes Betonprodukt.

Gattungsgemäße Beton- oder Pflastersteine weisen üblicherweise einen Kern (Kernbeton) und eine Oberflächenschicht (Vorsatzschicht, Deckschicht) auf, die auch als Vorsatzbeton bezeichnet wird. Die Vorsatzschicht ist die sichtbare Schicht des Betonprodukts, die bei einem zu erstellenden Bauwerk das optische Aussehen bestimmt. Die Vorsatz- bzw. Deckschicht wird durch die Zementwahl meist als Weiß- oder Grauzement in Form, Farbe und Größe der Gesteinskörnung, je nach Einsatzgebiet, ausgewählt und kann Pigmentstoffe zur farblichen Gestaltung der Oberfläche enthalten. Dabei kann Pigmentgröße und Gesteinskörnung in Form, Farbe und Größe variierend eingestellt werden. Die Gesteinskörnung wird in der Regel so gewählt, dass eine dichte Kornpackung entsteht und die Vorsatzschicht möglichst wasser- und luftdicht ist. Die Kernschicht ist die nicht sichtbare Schicht unterhalb der Vorsatzschicht, die für das Volumen und Gewichte des Betonprodukts und seine Stabilität verantwortlich ist. Der Kernbeton ist in seiner Rezeptur und Konsistenz meist gröber als die Vorsatzschicht, da der Kernbeton im Einbauzustand das Aussehen des Produkts nicht bestimmt und lediglich den mechanischen Anforderungen genügen muss.

Aufgrund der vielfachen Verwendung von Beton in der Gebäude- und Straßenarchitektur kommt es, aufgrund zunehmender Sonneneinstrahlung, zu unerwünschten Aufheizeffekten, so dass das Mikroklima innerhalb von Ballungsgebieten, insbesondere in Sommermonaten verschlechtert wird. Hierzu gibt es in jüngster Zeit Bestrebungen, Baustoffe mit einem hohen Infrarot-reflektierenden Anteil zu verwenden, bei dem der sogenannte TSR- oder Albedowert (total solar reflectance) und der SRI-Wert (solar reflectivity index) deutlich über dem von gewöhnlichem Beton liegt. So wird beispielsweise im LEED-Programm (Leadership in Energy and Environmental Design) der US-Regierung der Einsatz von Baumaterialien, die energetisch effizient, wassersparend sowie klimafördernd sind, ausdrücklich erwünscht. In diesem Zusammenhang wird die Entwicklung von wärmereflektierendem Beton mit Nachdruck gefördert.

Die Verwendung von Infrarot-reflektierenden Pigmenten ist beispielsweise aus der DE 10 2005 061 684 A1 für Farbanstriche und Kosmetika bekannt. Des Weiteren ist der Einsatz Infrarot-reflektierender Pigmente für Betonprodukte beispielsweise in der US 2009 027 2297 A1 offenbart, allerdings weisen diese Infrarot-reflektierenden Pigmente, die einem Beton beigemischt werden können, eine hohe Kerngröße auf und bilden somit einen das optische Erscheinungsbild dominierenden Bestandteil der Fassadenoberfläche. Eine optisch unbeeinflusste Oberflächengestaltung bei hoher IR-Reflektivität ist hierbei nicht möglich.

In der EP 1 817 383 B1 ist ein dunkles, flächiges Element mit geringer Wärmeleitfähigkeit und niedriger solarer Absorption beschrieben, bei dem das Trägermaterial eine Mischung aus Zement, Calciumsulfat oder Anhydrid ist, wobei darin Nanopartikel mit Dimensionen kleiner als 100nm eingemischt sein können. Die Nanopartikel können anorganisch sein, und z.B. aus Titandioxid, Zinkoxid oder Metallkolloide bestehen. Diese können im Infrarotbereich eine hohe Reflexion aufweisen.

Des Weiteren sind aus der DE 600 03 181 T2 eingefärbte Nanopigmente aus Ton mit einem organischen Farbstoff bekannt.

Aus der DE 20 2008 001 836 U1 ist ein Pflasterstein mit einer Kernschicht aus einem Kernbeton und einer Deckschicht bekannt, wobei die Deckschicht photokatalytische Nanopartikel aus Titandioxid in einem Anteil von 1-10 Gewichts-% umfasst. Die Nanopartikel weisen eine Größe zwischen 5 bis 80nm auf, um keine oder allenfalls nur eine geringfügige Pigmentierung, d.h. färbende Wirkung des Steins zu bewirken. Die Nanopartikel aus Titandioxid dienen zur Bereitstellung einer photokatalytischen Wirkung, um mittels UV-Licht organische Substanzen zu zersetzen, und somit eine Selbstreinigungswirkung bereitzustellen. Die Partikel sind homogen im Vorsatzzement eingemischt. Um eine hohe Nanopartikelkonzentration an der Oberfläche zu erreichen, müssen eine entsprechend hohe Menge an Partikel in den Vorsatzzement eingemischt werden, was zum einen die chemischen und mechanischen Eigenschaften des Vorsatzzements nachteilig beeinflusst und zum anderen entsprechend teuer ist.

Die DE 20 2008 001 836 U1 offenbart einen Pflasterstein, der zum Zersetzen von Verunreinigungen eine Deckschicht, bestehend aus einem bindemittelgebundenen Füllmaterial mit photokatalytischem Stoffgemisch, aufweist. Die Deckschicht ist hinsichtlich der Zusammensetzung über ihre Dicke homogen.

In der EP 2 233 456 A1 ist ein Bauteil auf Basis von Zement, Baukalk oder Gips, das auf der Oberfläche photokatalytische Teilchen aufweist, offenbart. Die Teilchen befinden sich lediglich an der Oberfläche des Bauteils, mit einer maximalen Schichtdicke von 50 µm, während der übliche Baukörper die Teilchen nicht aufweist. Die Teilchen können u. A. aus Titandioxiden und/oder Zinkoxiden gebildet werden. Die Teilchen der Oberflächenschicht sind hierbei in keiner Matrix gebunden, sondern werden "lose" auf das Bauteil aufgebracht.

Die DE 697 18 080 T2 beschreibt einen NOx-reinigenden Pflasterstein, der mit einer Oberflächenschicht aus Zement, NOx-reinigendem Titandioxid und Sand gebildet wird. Die Oberflächenschicht wird hierbei aus einer stochastisch verteilten Mischung der Komponenten gebildet. Die Oberflächenschicht dient der Reinigung der Luft von NOx.

In der WO 2007/106268 wird ein Verfahren zur Herstellung eines Bauteils aus einem zementgebundenen Grundkörper und einer zementgebundenen Oberflächenschicht, welche photokatalytische Teilchen enthält, offenbart. Beide Teile werden hierbei in einem nicht ausgehärteten Zustand miteinander verbunden. Die Oberflächenschicht dient zur Ausbildung einer algenresistenten Oberfläche.

Die JP 2001 0068529 zeigt ein Betongrundmaterial, auf das Titandioxid auf die Oberfläche vor der Erhärtung des Betongrundmaterials aufgesprüht wird. Die aufgesprühte Titandioxidschickt dient zur Aufnahme von Schadstoffen, Lärm oder zur Selbstreinigung.

Die KR 2006 0111938 A offenbart ein Verfahren zur Herstellung eines funktionellen Tiefbaumaterials unter Verwendung von Steinpulvern. Das Tiefbaumaterial kann somit insbesondere eine Druckfestigkeit von 150 kg / cm² haben.

Aufgabe der Erfindung ist es, ein Betonprodukt bereitzustellen, dass ganz oder teilweise innerhalb und/oder außerhalb seiner Matrix infrarotes Sonnenlicht reflektiert, und den solaren Reflektionsgrad (SRI) bzw. den thermischen Emissionsgrad (TSR-/Albedowert) derart erhöht, dass ein übermäßiges Aufheizen des Betonprodukts vermieden werden kann. Dabei soll die Betonmatrix optisch weitgehend unverändert bleiben, so dass ein gewünschtes optisches Erscheinungsbild des Betonprodukts beliebig einstellbar bleibt. Des Weiteren sollen störende sichtbare Lichtreflexionen für das Auge vermindert und das natürliche und herkömmliche Aussehen des Betonprodukts beibehalten werden. Der übermäßige Anteil des IR-reflektierenden Betonprodukts soll mit unveränderter Basisrezeptur, d.h. Zement, Wasser, und Gesteinskörnung herstellbar sein, und sowohl im Aussehen als auch im Aufbau des Kernbeton und auch der Vorsatzschicht beibehalten werden, um einen niedrigen Preis des Betonprodukts beizubehalten.

### OFFENBARUNG DER ERFINDUNG

Erfindungsgemäß wird die Aufgabe dadurch gelöst, dass ein Infrarot reflektierendes Betonprodukt vorgeschlagen wird, bei dem in der Matrix des Betons infrarot-reflektierende Nanopartikel (18) in einem nicht sichtbaren Größenbereich kleiner 150 nm umfasst sind. In der Matrix des Betons sind somit infrarot-reflektierende Nanopartikel in einem nicht sichtbaren Größenbereich kleiner 150 nm, bevorzugt kleiner 100 nm, insbesondere kleiner 30 nm, und im speziellen zwischen 5 bis 10 nm umfasst. Durch die Zugabe eines Nanokomposits in den Größenordnungen kleiner 150 nm, insbesondere kleiner 100 nm und bevorzugt in den Größenbereich von 5 bis 10 nm können infrarot-reflektierende Partikel beigemischt werden, die für das menschliche Auge nicht sichtbar sind, aber eine funktionale Veränderung der optischen Betoneigenschaften erreichen, so dass nicht sichtbare Bestandteile des Sonnenlichtes im Infrarotspektrum reflektiert werden, ohne dass der optische Gesamteindruck des Betonprodukts verändert wird. Somit ist es weiterhin möglich, das optische Äußere des Betonprodukts wunschgemäß anzupassen, beispielsweise in Form, Farbe und Oberflächengestaltung, jedoch thermisch günstige Reflexionseigenschaften zu erreichen.

Ein wesentlicher Aspekt der Erfindung liegt in der Beigabe von Nanopartikeln, beispielsweise Indium-Zinnoxid (ITO) oder Aluminiumoxid als nanostrukturiertes Komposit in Pulverform mit einer Partikelform von < 150 nm, dass eine sichtbare Transparenz und somit eine Neutralität in Bezug auf Aussehen der Deckschicht gewährleistet. Die Nanopartikel können als Pulver oder als Bestandteil eines dispersiven Systems, wie Feststoffgemisch, Suspension oder Emulsion vorliegen. Die Nanopartikel können in den Zementleim des Deckschichtbetons eingemischt werden, und somit eine homogene Durchsetzung des Deckschichtbetons gewährleisten. Solche Betonprodukte können insbesondere Dachziegel- oder Plattenprodukte für eine Bedachung, Hausfassadenbedeckung oder ähnliches sein. Vorteilhafterweise sind solche Betonprodukte dünnwandig ausgestaltet, da die Nanopartikel gleichmäßig im Produktvolumen verteilt sind. Erfindungsgemäß wird vorgeschlagen, dass vor Aushärten der Deckschicht eine graduelle Variation der Nanopartikel von einer geringeren Verteilung im Volumeninneren zu einer höheren Konzentration an der Oberfläche des Betonproduktes vorgesehen wird.

Erfindungsgemäß umfasst das Betonprodukt zumindest eine Deckschicht aus einem Deckschichtbeton und eine Kernschicht aus einem Kernbeton. Der Zementleim des Deckschichtbetons wird mit eingemischten Nanopartikeln hergestellt. Somit sind in der Matrix des Deckschichtbetons Infrarot-reflektierende Nanopartikel umfasst, und der Kernbeton ist aus einer gewöhnlichen Zement/Gesteinskörnung/Wasser-Mischung hergestellt. Im Kernbeton kann auf das Beimischen von Nanopartikel verzichtet werden, da der Kernbeton unsichtbar für den Betrachter bleibt. Grundsätzlich kann das Betonprodukt komplett mit dem Infrarot reflektierenden Deckschichtbeton umhüllt sein. Aufbau und Struktur des Kernbetons kann dem bisher bekannten Stand der Technik entsprechen, da im nicht sichtbaren Teil eines Bauwerkes, hier dem Kernbeton, das Sonnenlicht nicht hinein gelangen kann, so dass Nanokomposite nicht hinzugefügt werden müssen. Der Kernbeton weist eine homogene Dichte auf, die meist höher als die der Deckschicht ist und Festigkeit und Steifheit des Betonprodukts dominiert. Die Vorsatzschicht kann entsprechend dünn gehalten werden, um die Beimengung von relativ teuren Nanopartikeln in geringen Mengen kostengünstig zu gestalten. Es ist auch denkbar, dass Kern schichtbeton und Deckschichtbeton mit eingemischten Nanopartikeln die gleiche Dichte aufweisen, so dass ein Betonprodukt mit homogenen mechanischen Eigenschaften bereitgestellt werden kann

Erfindungsgemäß ist der Deckschichtbeton durch Einmischen der Nanopartikel in einen Zementleim hergestellt und auf eine bereits gegossene Kernschicht aufgetragen. Der Zementleim ist eine zähflüssige Mischung aus Zement und Wasser und bildet die Grundlage für jeden Beton. In dem Zementleim für den Vorsatzbeton, der entsprechend der Exponiertheit gegen Wettereinflüsse besonders luft- und wasserdicht ausgestaltet sein kann, können die Nanopartikel bereits während der Herrichtung des Zementleims eingemischt und auf die Kernschicht aufgegossen werden. Dabei kann die Dicke der Kernschicht frei eingestellt werden. Durch Variation der Einmischung der Nanopartikel können unterschiedliche Reflexionsgrade, beispielsweise für unterschiedliche Ausrichtungen des Betonprodukts gegenüber dem Sonnenverlauf erreicht werden. Auch lässt sich beispielsweise durch eine Strukturierung der Nanopartikeldichte innerhalb des Betonprodukts ein optischer Gesamteindruck eingestellt und eine optische Vorzugswirkung der Infrarotreflexion erreichen, so dass beispielsweise die Rückstrahlung der Infrarotwellen in einem bestimmten Winkel Richtung Himmel und nicht Richtung Erdboden eingestellt werden kann. Der Zementleim wird mit Sand, Kies oder anderen Gesteinskörnern vermischt und kann beispielsweise noch mit reinem Quarzsand zur verbesserten Rostschutzwirkung von Stahlarmierungen oder anderen Zuschlagsstoffen beaufschlagt werden. Des Weiteren können Farbpigmente beigemischt werden, um die optische Wirkung des Vorsatzbetons einstellen zu können.

Des Weiteren ist erfindungsgemäß die Deckschicht gegenüber der Kernschicht derart gestaltet, dass die Kernschicht im Wesentlichen Volumen, Form und Stabilität des Betonprodukts bereitstellt. Dies bedeutet, dass die Kernschicht im Wesentlichen das Betonprodukt ausmacht und nur eine im Verhältnis dünne Vorsatzschicht auf die Oberfläche der Kernschicht aufgetragen wird, die die ökologisch günstigen Eigenschaften aufweist. Hierdurch werden Kosten für die Nanopartikelbereitstellung reduziert und das Volumen des Deckschichtbetons kann gegenüber dem Kernschichtbeton erheblich verringert werden. Das Betonprodukt weist dieselben mechanischen Eigenschaften bezüglich Festigkeit, Stabilität und Haltbarkeit wie ein herkömmliches Betonprodukt ohne Nanopartikelbeimischung auf, allerdings wird an seiner Oberfläche eine hohe solare Reflexionsrate erreicht.

Erfindungsgemäß weist der Gewichtsanteil der Nanopartikel im Deckschichtbeton mindestens 5 bis 30%, insbesondere 8 bis 20 % auf. Durch eine Erhöhung des Gewichtsanteils wird in der Regel die vorteilhafte Wirkung der Infrarot-reflektierenden Nanopartikel verbessert. Allerdings kann bei einem zu hohen Anteil der Nanopartikel der optische Gesamteindruck verändert werden, so dass ein Kompromiss in den vorgegebenen Mengenanteil gefunden werden kann. Mit den angegebenen Mischungsverhältnissen bleibt der Gesamteindruck der Oberflächengestaltung des Betonprodukts erhalten, und durch die Infrarot-reflektierende Wirkung kann ein zufrieden stellendes Ergebnis erreicht werden.

Erfindungsgemäß sind zusätzliche Nanopartikel vor Aushärtung der Deckschicht in die Oberfläche der Deckschicht eingebracht, insbesondere eingeblasen, eingestreut oder andersartig aufgebracht. Somit wird eine erhöhte Konzentration von Nanopartikel vor Aushärtung der Deckschicht in die Oberfläche der Deckschicht eingebracht und es wird eine graduelle Verteilung der Nanopartikel mit erhöhter Konzentration auf der Oberfläche und abnehmender Konzentration in Richtung Kernbeton erreicht, so dass die IR-reflektierende Wirkung auf der Oberfläche deutlich verbessert werden kann. Die Nanopartikel können in die noch nicht vollständig ausgehärtete Deckschicht eingestreut, mit Luftdruck eingeblasen oder eingesputtert bzw. durch ein Gasphasenabscheidungsverfahren in die Oberfläche eingebracht oder adsorbiert werden. Das Einbringen der Nanopartikel in den Vorsatzzement erfolgt dabei vorteilhafterweise in einer Zeitspannen nach dem Auftragen des frischen Vorsatz-Zementleims bis zu dessen vollständigen Aushärtung, das bis zu 28 Tage dauern kann. Die Intensität des Einbringens und der Zeitpunkt entscheidet über Menge und Gradient der Nanopartikelverteilung von hoher Konzentration an der Oberfläche zu verringerter Konzentration in Richtung Kernbeton.

Die vorliegende Erfindung schlägt somit vor, durch eine erhöhte Konzentration von 5 % bis 30 % Gewichtsprozent Nanopartikel eine hohe IR-Reflexionswirkung zu erreichen, wobei zusätzliche Nanopartikel an der Oberfläche während der Aushärtung in der Deckschicht eingebracht sind, insbesondere eingeblasen oder eingestreut sind, um eine IR-reflektierende Oberfläche zu erreichen. Die Nanopartikel sind allerdings so klein, dass sie mit dem Auge kaum wahrnehmbar sind. Damit wird ein Aufheizen des Steins verhindert. Zweifelsohne weist die Oberfläche eines erfindungsgemäßen Betonproduktes eine Nanopartikelkonzentration auf, die deutlich über 10% liegt.

Entsprechend einer vorteilhaften Weiterentwicklung können die Nanopartikel Glimmer, Metallpulverpigmente und/oder eine metallische Halbleiterverbindung, insbesondere Metall-Oxide oder Metall-Zink-Oxide umfassen. Glimmer sind Schichtsilikate und weisen eine glatte Oberfläche sowie eine hohe optische Reflektivität von Licht im Infrarotbereich auf. Die vorgenannten Materialien ermöglichen eine hohe Reflektivität der Vorsatzschicht im infraroten Spektrum des Sonnenlichts und können bereits in geringen Vorsatzschichtdicken eine verbesserte thermische Reflektivität des Betonprodukts bereitstellen. Aufgrund der geringen Größe der Nanopartikel sind diese für das menschliche Auge nicht sichtbar und beeinflussen beim Beimischen in die Matrix des Deckschichtbetons das optische Äußere nicht.

In Bezug auf das vorangegangene Ausführungsbeispiel ist es besonders vorteilhaft, dass die Nanopartikel Aluminium-Partikel, Aluminiumoxid-Partikel, Titandioxid-Partikel (TiO₂), bevorzugt in Anatas-, Brookit- oder Rutilform, Indium-Zinnoxid-Partikel (ITO), insbesondere aluminiumdotiertes Zinnoxid-Partikel oder Zinkoxid-Partikel oder eine Mischung davon umfassen. Die Mischung kann eine Kombination der vorgenannten Partikel sein, z.B. eine Kombination aus Zinkoxid-Partikel, mit Aluminium-Partikel oder weitere Kombinationen mit zwei, drei oder mehreren verschiedenen Partikeltypen. Insbesondere aluminiumdotierte Zinkoxidpartikel eignen sich hervorragend als Beimischung in die Deckschicht. Metallpulverpigmente in Form von Aluminium bzw. Aluminiumoxiden weisen eine sehr hohe IR-Reflektivität auf, und Titandioxid bietet neben der verbesserten IR-Reflexion einen photokatalytischen Selbstreinigungseffekt. Durch die Bestrahlung mit Sonnenlicht können organische Materialien auf der Oberfläche zersetzt werden. Die entstehenden Betonoberflächen bleiben sauber und wirken antimikrobiell. Bei manchen Oberflächen kann Tröpfchenbildung verhindert werden, so dass mit dem Auge kein Beschlagen dieser Oberfläche sichtbar bleibt. Insbesondere können metallische Halbleiterverbindungen solche photokatalytischen Selbstreinigungseffekte bewirken, da durch von Licht erzeugte Elektronenlochpaare freie Radikale zur Zersetzung organischer Substanzen bereitstellen. Diese Eigenschaften können in den beigemischten Nanopartikeln enthalten bzw. durch geeignete Mischungsverhältnisse hinzugefügt werden.

Indium-Zinnoxid ITO ist ein halbleitender, in sichtbarem Licht weitgehend transparenter Stoff mit hoher Infrarotreflektivität. Er ist insbesondere zum Aufbau einer Wärmeschutzbeschichtung auf Fensterglas bekannt. Alternativ zu Indium-Zinnoxid können beispielsweise auch SnO₂:F, d.h. mit Fluor dotiertes Zinnoxid, ZnO:Al, d.h. mit Aluminium dotiertes Zinkoxid oder SnO₂:Sb mit Antimon dotiertes Zinnoxid eingesetzt werden. Die vorgenannten Nanopartikel können vorteilhaft in beliebigen Mischungsverhältnissen zur Ausbildung der verbesserten Eigenschaften des Deckschichtbetons beigemischt werden. ,

In einer vorteilhaften Weiterbildung kann der Zementleim des Deckschichtbetons zumindest teilweise Polyurethan umfassen. Hierbei ist es denkbar, dass der Zementleim vollständig durch einen Polyurethanleim, d.h. einem Leim auf Basis von Polyurethan gebildet wird, so dass der Zement durch Polyurethan ersetzt wird. Dies hat den Vorteil, dass die zugegebenen Infrarot-reflektierenden Nanopartikel ohne mechanische Nachbearbeitung für die Reflexion der IR-Strahlen sich an der Oberfläche ansammeln und somit an der Oberfläche in hoher Konzentration vorliegen. Hierdurch wird die Reflektivität der Deckschichtbeton-Oberfläche deutlich verbessert, insbesondere wenn der Anteil des Polyurethan in dem Zementleim erhöht wird, bzw. wenn Polyurethan den Zement vollständig ersetzt.

In einer vorteilhaften Weitergestaltung kann zu einer weiterhin verbesserten IR-Reflektivität weiße bzw. hell reflektierende Zusatzstoffe und/oder helle, lichtreflektierende Gesteinskörnungen und Sande den Nanopartikeln und/oder der Zementmatrix, d.h. dem Zement beigemischt werden. Diese Zusatzstoffe können eine Partikelgröße < 100 nm, allerdings auch eine Partikelgröße weit über 100 nm aufweisen, so dass der optische Gesamteindruck durch die Zusatzstoffe beeinflusst wird. Die Gesteinskörnungen und Sande können Bestandteil des Zements sein und verbessern durch ihre helle, reflektierende Färbung die Reflexionswirkung des Deckschichtbetons. Durch die helle Farbgebung der Außenoberfläche wird zusätzlich zu der Infrarot-reflektierenden Nanopartikelwirkung eine verbesserte Infrarotreflektivität, insbesondere an der Oberfläche des Betonprodukts erreicht.

Grundsätzlich können die Nanopartikel aus den vorgegebenen Zusatzstoffen aufgebaut sein. In einer vorteilhaften Weiterbildung kann ein mehrschichtiger Aufbau der Nanopartikel, insbesondere in einer Abfolge Glimmer - Metallpulver und/oder Glimmer-Halbleiterverbindung erfolgen. Bevorzugt sind die Nanopartikel mit Aluminium oder einem anderen Metall, beispielsweise Zink, Zinn, Eisen, Kupfer, Wolfram oder einem anderen Metall dotiert, um eine Verbesserung der Infrarot-reflektierenden Eigenschaften in der Betonmatrix zu bewirken. Durch den mehrschichtigen Aufbau kann neben der verbesserten IR-Reflektivität eine erhöhte Langlebigkeit und chemische Stabilität der Nanopartikel gegen äußere Umwelteinflüsse erreicht werden.

So können in einer weiterführenden vorteilhaften Ausgestaltung die Nanopartikel eine Beschichtung aufweisen, insbesondere eine Glimmer- Metall- und/oder eine Oxidbeschichtung, beispielsweise eine Beschichtung mit einer durchsichtigen SiO₂-Oberfläche. Hierdurch werden die Nanopartikel gekapselt und langlebig chemisch beständig gegen Umwelteinflüsse geschützt. Hiermit kann eine dauerhafte und vorteilhafte IR-Reflektivität des Betonprodukts über Jahrzehnte bereitgestellt werden.

Grundsätzlich kann die Dicke der Deckschicht beliebig sein. Vorteilhaft kann die Dicke in einer Größenordnung von 3 bis 20 mm, insbesondere 5 bis 10 mm ausgeführt sein. Somit weist bei den meist großvolumigen Betonprodukten die Deckschicht nur einen kleinen Bestandteil der Dicke des Betonprodukts auf, so dass erhöhte Kosten für die Nanopartikel kaum ins Gewicht bezüglich der Gesamtherstellkosten des Betonproduktes fallen. Durch die vorgegebenen Dicken wird selbst bei stark strapazierten Fahrbahn- oder Gehwegsoberflächen mit hohem Oberflächenabrieb eine langlebige und dauerhafte Deckschicht gewährleistet und es kann eine ausreichend hohe Dichte an Nanopartikel aufgebracht werden, um die vorteilhaften Eigenschaften des Betonprodukts aufrecht zu erhalten.

Des Weiteren ist vorteilhaft möglich, dass die Deckschicht beliebig einfärbbar ist, und die Nanopartikel unabhängig von der Farbgebung für die notwendige Infrarotreflexion, insbesondere bei hoher Konzentration der Nanopartikel an der Oberfläche der Deckschicht sorgen. Da die Nanopartikel optisch unauffällig erscheinen, kann eine beliebige Einfärbung des Decksichtbetons vorgenommen werden, um einen gefälligen optischen Gesamteindruck zu erreichen. So kann die Deckschicht hell, dunkel oder farbig beliebig eingefärbt sein, wobei eine gleichbleibende IR-Reflektivität unabhängig von der Farbgebung erreicht werden kann, und somit ein angepasstes und individuelles Oberflächenerscheinungsbild mit hoher InfrarotReflektivität geschaffen werden, so dass das Betonprodukt vielfältig eingesetzt werden kann. Für die Einfärbung kann die Art der Gesteinskörnung variiert und verschiedene Oxide, insbesondere Metall- und Siliziumoxide eingesetzt werden.

In einer vorteilhaften Ausführungsform kann die Deckschicht zur Freilegung der Infrarot reflektierenden Nanopartikel mechanisch nachbearbeitet, insbesondere geschliffen, gestrahlt, gefräst oder andersartig aufgeraut werden. Durch eine mechanische Nachbearbeitung können abdeckende Zementschleier und Zementschichten entfernt und die Oberfläche gesäubert werden, so dass die IR-reflektierenden Partikel freigelegt werden können. Auch wird die Oberfläche der Deckschicht aufgeraucht und vergrößert, beispielsweise durch Wasser- Sand- oder Kugelstrahlen, mechanisches Fräsen, Schleifen, Rillieren, Satinieren mit einer Bürste. Durch Aufrauen wird die effektive Oberfläche der Deckschicht vergrößert, und IR-reflektierende Nanopartikel freigelegt, so dass eine höhere Reflexionsrate erreicht werden kann. Die erhöhte Menge an freiliegenden Nanopartikeln ermöglicht es, einen größeren Prozentsatz von Infrarotstrahlung zu reflektieren, wobei durch die geschaffene Oberflächenrauhigkeit eine verbesserte Rutschhemmung und Griffigkeit für begehbare Oberflächen geschaffen wird.

Bezüglich einer mechanischen Nachbearbeitung hat es sich als vorteilhaft erwiesen, einen Polierschritt vorzusehen, insbesondere einen Polierschritt mit einer Diamantschleifscheibe vorzusehen, um eine polierte Deckschichtoberfläche zu erreichen. Ist die Oberflächenkonzentration von IR-reflektierenden Nanopartikeln relativ hoch, so kann durch ein Rauschleifen der Oberfläche kein weiterer Beitrag zur verbesserten Reflektivität erreicht werden. Durch ein Polierschleifen wird dagegen eine glatte, polierte Oberfläche geschaffen, wobei insbesondere Nässe gut ablaufen bzw. bei einer geeigneten Nanobeschichtung abperlen kann, und somit ein schnelles Trocknen der Oberfläche erreicht wird. Durch Nässe wird zum einen die Farbe einer Oberfläche verdunkelt, so dass nasse Oberflächen eine geringere Reflektivität aufweisen und somit ein beschleunigtes Aufheizen feuchter Oberflächen gegeben ist. Zum anderen sind polierte Oberflächen schmutzabweisend und leichter zu reinigen. Letztlich können polierte Oberflächen durch eine Nanobeschichtung versiegelt werden, die den IR-reflektierenden Effekt der Nanopartikel unterstützt, und beispielsweise einen Lotuseffekt hervorruft. Eine geschliffene, polierte Oberfläche absorbiert weniger IR-B und IR-C Wärmestrahlung aus der Umgebung und lässt sich somit von reflektierter Wärmestrahlung umgebender Baustoffe geringer aufheizen, d.h. eine indirekte Aufheizung durch weitere aufgeheizte Bauten wird durch eine Oberflächenpolitur verringert.

Alternativ kann in einer vorteilhaften Ausführungsform die Deckschicht mit einer flächigen Nanobeschichtung versehen sein. Somit wird auf die Deckschicht eine zusätzliche Nanostruktur aufgebraucht, die beispielsweise superhydrophob, d.h. flüssigkeitsabweisend und flüssigkeitsperlenbildend oder superhydrophil, d.h. flüssigkeitsabweisend und flüssigkeitsfilmbildend, wirken kann. Die Nanobeschichtung kann aufgesprüht oder mechanisch auf der Oberfläche abgetragen werden, wobei auch gängige Adsorptions- und Abscheidungsverfahren angewendet werden können. Somit wird die Deckschichtoberfläche versiegelt und wirkt wasserabweisend, wobei die Oberfläche leicht gereinigt werden kann. Die Nanobeschichtung kann vorteilhaft selbst Infrarot-reflektierende Eigenschaften aufweisen bzw. infrarot-reflektierende Nanopartikel enthalten. Die Nanopartikelbeschichtung kann SiO₂-Partikel, d.h. Quarzglaspartikel umfassen, die eine hervorragende Reflektvität gegenüber Wärmestrahlung im IR-B und IR-C aufweist. Insbesondere kann eine Kombination von Infrarot-reflektierenden Nanopartikel, insbesondere TiO2-Partikel in Anatas-Kristallstruktur mit Quarzglas eine besonders geringe Oberflächenaufheizung gewährleisten, wie weiter unten erläutert wird.

Die Beschichtung kann des Weiteren ein Anhaften von Sprayfarbe verhindern und gegebenenfalls einen Lotus-Effekt ermöglichen, so dass auch Fette, Öle und Säuren abgewiesen werden können. Des Weiteren kann durch die Nanobeschichtung die mechanische Festigkeit und Abriebsfestigkeit der Oberfläche verbessert werden. Die Beschichtung kann in die Gesteinskörnung eindringen und somit eine glatte Oberfläche sowie eine tiefeneindringende Versiegelung des Betonproduktes bewirken.

Gemäß einer vorteilhaften Weiterbildung kann das Einbringen der zusätzlichen Nanopartikel vor Aushärtung der Deckschicht innerhalb eines Zeitraums von Herstellen der Vorsatzzementschicht, d.h. dem Auftragen des viskosen und mit IR-reflektierenden Nanopartikeln versehenen Vorsatzzementleims bis ca. 28 Tage später erfolgen. Je später nach der Auftragung des viskosen Zemtleims ein Einbringen der Nanopartikel erfolgt, insbesondere Einblasen, Einstreuen oder Einwalzen erfolgt, umso höher wird die Oberflächendichtekonzentration und umso geringer die Eindringtiefe der Nanopartikel in die Oberfläche sein. Die Nanopartikel können mittels einer Wasser / Nanopartikelemulsion fein verteilt auf der Oberfläche der Deckschicht eingebracht werden, dies verbessert insbesondere die homogene Partikelverteilung. Weiterhin vorteilhaft kann die Emulsion unter Druck mittels einer Düse eingesprüht werden. Die Düse kann einen fächerförmigen oder einen zirkularen Strahl abgeben, um ausgedehnte Oberflächen bzw. kleinteilige Oberflächenelemente zu behandeln. Werden die Nanopartikel mittels eines Druckstrahls eingeblasen, kann durch den Einbringungszeitpunkt, die Einsprüh-Druckeinstellung und die Nanopartikelkonzentration in der Emulsion sowohl Partikelgradient als auch Partikelmenge gesteuert werden. Denkbare weitere Einbringverfahren können ein Eintauchen in eine Nanopartikellösung oder ein Schleuderbeschichtungsverfahren sein, wobei durch Rotation des Betonproduktes die Partikellösung gleichmäßig auf der Oberfläche verteilt wird.

Vorteilhafterweise kann die Wasser/Nanopartikelemulsion ein Sol-Gel sein, das weiterhin Si-, SiO- und/oder SiO₂-Partikel umfasst, so dass eine Eindringen und/oder Beschichten des Vorsatzbetons durch Quarzglaspartikel erfolgt. Ein Sol-Gel bildet eine anorganische Materialverteilung durch kolloidale Dispersion aus, d.h. es werden feinste Teilchen auf der Oberfläche und in der Tiefe der Deckschicht verteilt. So entstehen in der Lösung in einer ersten Grundreaktion aus den Si-, SiO- oder SiO₂-Teilchen Quarzglaspartikel, die neben den Nanopartikeln, oder auch diese umschließend oder verbindend auf der Oberfläche und in gradueller Konzentration in die Tiefe der Deckschicht eindringen. Es entsteht eine dünne Vernetzung der Quarzglasspartikel mit der Matrix des Vorsatzzements, die graduell in die Tiefe Richtung Kernbeton reicht. Die entstehenden Quarzglaspartikel sind in Nanogröße ausgebildet und für das menschliche Auge nicht sichtbar. Insbesondere kann das Sol-Gel 0,1% bis 10% Nanopartikel, bevorzugt 0,5% bis 5%, insbesondere 1% Nanopartikel umfassen. Weiterhin kann das Sol-Gel 3% bis 30%, bevorzugt 5% bis 15%, insbesondere 10 % Quarzglaspartikel umfassen. Die eingesetzten Nanopartikel können bevorzugt TiO₂-Partikel sein, die vorteilhafterweise in Anatas-Kristallstruktur vorliegen. Durch eine kombinierte Quarzglas / IR-reflektierende Nanopartikelverteilung kann ausgehend von der Oberfläche eine graduell abnehmende Konzentration in das Innere der Deckschicht bereitgestellt werden. Da die Konzentration graduell in die Tiefe der Deckschicht abnimmt, kann durch einen nachgeschalteten mechanischen Bearbeitungsschritt der Oberfläche oder abnutzungsbedingten Abrieb der Oberfläche eine hohe IR-Reflektivität über einen langen Zeitraum bei stark belasteten Oberflächen gewährleistet werden. Die Quarzglasbeschichtung hat einen hydrophoben Effekt und bewirkt eine Wasserabperlung, so dass Feuchtigkeit bzw. Regenwasser schnell abläuft bzw. verdunstet, somit die Oberfläche nicht nässebedingt verdunkelt und die Aufwärmung der feuchten Oberfläche nicht reduziert ist.

Die Infrarot-reflektierenden Nanopartikel haben die Eigenschaft, Infrarotes Licht des Typs A, d.h. nahes Infrarotlicht im kurzwelligen Bereich von 0,78 - 1,4 µm in hohem Maße zu reflektieren. Quarzglaspartikel reflektieren hingegen insbesondere Infrarot-Wärmestrahlung in einem langwelligeren IR-B und IR-C Bereich (Wärmestrahlung) von 1,4 µm -3 µm bzw. 3,0 µm -50 µm und sind für IR-A Strahlung nahezu transparent. Dringt kurzwelliges Licht in eine Oberfläche ein, so heizt sie diese auf, d.h. das kurzwellige IR-A Licht wird in langwellige IR-B und IR-C Wärmestrahlung umgewandelt, so dass die Oberfläche Wärmestrahlung im IR-B und IR-C Bereich abgibt. Eine Quarzglasbeschichtung bzw. Quarzglaspartikel alleine ohne weitere, IR-A reflektierende Nanopartikel würden ein Eindringen von IR-A Licht nicht verhindern, und die im Inneren des Betonproduktes entstehende Wärmestrahlung reflektieren, d.h. einen Wärmestau verursachen und ein "Aufheizen des Betonproduktes durch IR-A Strahlung bewirken. Durch die IR-A reflektierende Wirkung der Nanopartikel - allen voran TiO₂-Partikel, die vorteilhafterweise in Anatas-Kristallstruktur vorliegen - wird ein Eindringen von IR-A Licht verhindert, wobei ein Eindringen der langwelligeren IR-B Strahlung durch die Quarzglaspartikel verhindert wird. Somit ergibt die Kombination aus IR-reflektierenden Nanopartikel mit Quarzglaspartikel eine synergetische Wärmereflektivität, da sowohl IR-A, als auch IR-B und IR-C Licht durch die verschiedenen Partikelarten reflektiert werden. Nebenbei sorgen die IR-reflektierenden Nanopartikel für eine photokatalytische Selbstreinigung der Oberfläche. Wird vorteilhafterweise die Oberfläche durch ein mechanisches Verfahren poliert, so wird eine Linsenwirkung und Verdunkelung durch Oberflächennässe vermindert und die IR-B reflektierende Wirkung weiterhin verbessert. Ein Feinschleifen bzw. Polieren ist insbesondere für nicht begehbare Flächen wie Fassaden- und Verkleidungselemente vorteilhaft. Begehbare Flächen wie Pflasterflächen benötigen eine definierte Mindestoberflächenrauheit, um einen Rutschwiderstand zu bieten. Somit ist ein Rauschleifen mit einer Mindestrauigkeit dieser Oberflächen einzuhalten. Dennoch kann auch bei einer rauen, beispielweise kugel- oder sandgestrahlten Oberfläche mittels einer weiteren Nanobeschichtung eine wasserabweisende Oberfläche bei ausreichender Rutschhemmung gebildet werden, um einen Wasserabperleffekt bereit zu stellen und eine nachteilige Aufheizung einer feuchten Oberfläche zu vermindern.

Ausgehend von der vorherigen vorteilhaften Kombination von Quarzglaspartikeln mit IR-A reflektierenden Partikeln können folgende Hinweise zur Verminderung einer Wärmespeicherung eines Betonproduktes gegeben werden:
Zur Reflexion von kurzwelligen IR-A Licht im Wellenbereich von 0,78 bis 1,4 µm sind folgende Optionen in der Vorsatzschicht vorteilhaft, die einzeln oder in beliebigen Kombinationen einsetzbar sind:
- Einbringen heller Farbpartikel, z.B. Jura Splitte oder helles Porphyr, Farben oder Zuschlagsstoffe erhöhen die Reflexion von Infrarotstrahlung;
- Vorsehen von metallisierte Oberflächen bzw. Metallpartikel und Metallhaltige Partikel erhöhen die Reflexion;
- Freilegen von IR reflektierender Partikel durch mechanisches Nachbearbeiten der Oberfläche;
- Auswahl einer Partikelgröße, die deutlich anders als die Wellenlänge des Lichts, d.h. Potenzen kleiner als 1 µm gewählt ist, um Molekülschwingungseffekte in den Partikeln und daher eine hohen Wärmeeintrag zu verhindern;
- Oberflächenbefeuchtung ist zu vermeiden, z.B. durch eine Nanobeschichtung oder eine Oberflächenpolierung, da Nässe zur verminderten Reflexion bei erhöhter Absorption führt. Vorteilhaft sind nässeabweisende Oberflächenbeschichtungen

Zur Reflexion von langwelligem IR-B und IR-C Licht im Wellenbereich von 1,4 bis 50 µm sind folgende Optionen in der Vorsatzschicht vorteilhaft, die einzeln oder in beliebigen Kombinationen einsetzbar sind:
- Oberflächenpolieren zur Schaffung glatter, polierter Oberflächen;
- Zusätzliche Glaspartikel- oder Glasbeschichtung, wodurch aus der Umgebung reflektierte Wärmestrahlung nicht in die Vorsatzschicht eindringen kann, sondern durch die Glaspartikel reflektiert wird;
- Bereitstellen eines Durchlüftungssystems zum erhöhten Wärmeabtransport durch thermische Konvektion, z.B. Lüftungskanäle, Luftleitflächen, Ausnutzung von Kaminwirkungen sowie Anordnung von benachbarten Oberflächen mit geringer Wärmeabsorption.

Schließlich kann in einem vorteilhaften Ausführungsbeispiel das Betonprodukt als Pflasterstein, als Außenfassadenstein, als Mauerstein oder als Dachziegel ausgeführt sein. Insbesondere bei hohen mechanischen Belastungen, wie bei Fahrbahn- oder Fußwegbepflasterung kann durch Einmischen der Partikel in die Matrix des Decksichtbetons eine hohe Langlebigkeit erreicht werden gegenüber IR-reflektierenden Farbanstrichen oder einer Oberflächenaufbringung Infrarot-reflektierender Partikel.

Vorteilhaft kann eine Zementmischung beispielsweise als Transportbeton verarbeitungsfertig vorliegen, oder als Zement beispielsweise als Sackware vorliegen, wobei die Zementmischung Infrarot-reflektierende Nanopartikel zur Herstellung eines Deckschichtbetons umfasst. Die Zementmischung ist entsprechend der oben beschriebenen Eigenschaften des Betonproduktes verarbeitungsfertig konfektioniert und verarbeitungsfertig dazu vorgesehen, als Zementleim, z.B. gelöst in Wasser zur Herstellung einer Deckschicht des Betonproduktes eingesetzt zu werden. Die Zementmischung ist somit ein wesentliches Element zur Herstellung des Infrarot-reflektierenden Betonprodukts und seine Zusammensetzung bestimmt die reflektierende Wirkung des herzustellenden Betonproduktes. Die dem Zement oder Polyurethan beigemischten Nanopartikel können die vorgenannten Eigenschaften aufweisen und die Mischung kann helle, reflektierende Zuschlagsstoffe enthalten. Die Zementmischung stellt eine verarbeitungsfertige Mischung zur einfachen und kostengünstigen Herstellung beliebiger Betonprodukte bereit, die sowohl vorproduziert als auch unmittelbar an einer Baustelle zur individualisierten Gestaltung eines Betonproduktes verwendet werden können.

### ZEICHNUNGEN

Weitere Vorteile ergeben sich aus der vorliegenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- **Fig. 1**: ein Pflasterstein eines erfindungsgemäßen Ausführungsbeispiels eines Betonprodukts mit vergrößerter Nanostruktur des Deckschichtbetons;
- **Fig. 2**: ein Ausführungsbeispiel eines Pultsteins gemäß der Erfindung;
- **Fig. 3**: ein Ausführungsbeispiel eines Decksteins gemäß der Erfindung;
- **Fig. 4**: ein Ausführungsbeispiel eines Mantelsteins gemäß der Erfindung;
- **Fig. 5**: ein Ausführungsbeispiel eines Mauersteins gemäß der Erfindung;
- **Fig. 6**: ein Ausführungsbeispiel eines Vollmantelsteins gemäß der Erfindung.

### AUSFÜHRUNGSFORMEN DER ERFINDUNG

In den Figuren sind gleiche oder gleichartige Komponenten mit gleichen Bezugszeichen beziffert.

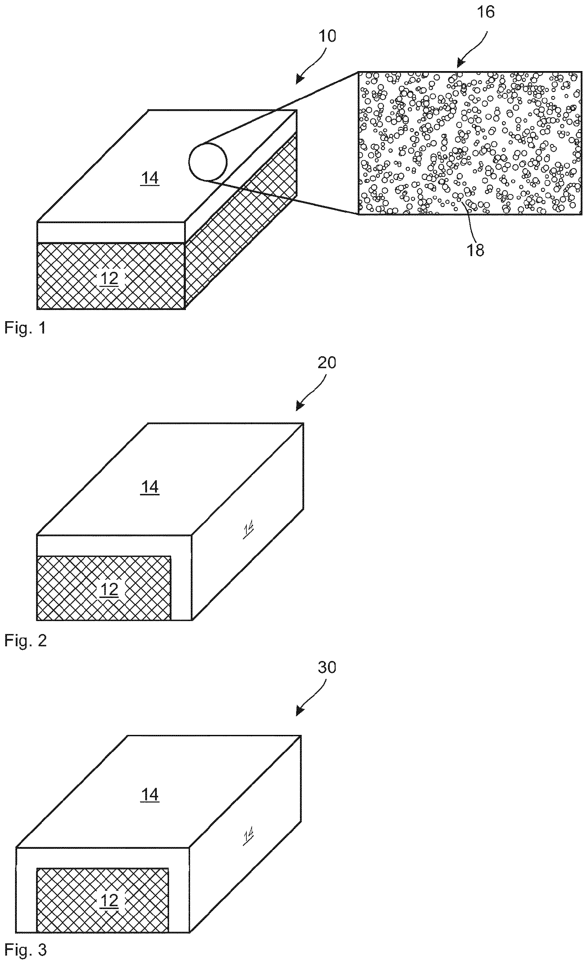

Fig. 1 zeigt einen Pflasterstein 10, der aus einer Kernschicht 12 und einer Deckschicht 14 besteht. Die Deckschicht 14 ist aus widerstandsfähigem und abriebsfestem Beton, der luft- und wasserundurchlässig ist, und der eine geringfügige Dicke gegenüber der Kernschicht 12 aufweist. In der Matrix 16 des Deckschichtbetons 12 sind Nanopartikel 18 eingemischt, die Infrarot-reflektierend wirken. Die Nanopartikel 18 haben eine Größe < 150 nm und sind für das menschliche Auge unsichtbar. Durch einen hohen Anteil Nanopartikel 18 bezogen auf die Gesamtoberfläche der Deckschicht kann ein hoher Infrarotreflexionsgrad der Deckschicht 14 erreicht werden. Die Besonderheit des Pflastersteins 10 liegt darin, dass Infrarot-reflektierendes Material beispielsweise Indium-Zinnoxid oder ähnliche Stoffe in dem Deckschichtbeton direkt in den Zementleim eingemischt und zunächst gleichmäßig verteilt in nanostrukturierter Pulverform zur gezielten Reflexion von Sonnenlicht-Infrarotstrahlung enthalten ist durch eine zusätzliches Einbringen weiterer Partikel während der Aushärtung des Zemtleims wird ein graduelle Partikelverteilung erreicht, wobei an der Oberfläche die höchste Partikeldichte und Richtung Kernbeton eine abnehmende Partikeldichte vorhanden ist. Die Vorteile eines direkten Einmischens liegen in der kompletten Durchdringung der Zementmatrix 16. Da die Betonoberfläche durch eine Verkehrsabnutzung in ihrer Lebensdauer stark beansprucht wird, sind insbesondere infrarot-reflektierende Oberflächenbeschichtungen ungeeignet, so dass die Bereitstellung eines graduellen Partikelverlaufs in den Vorsatzbeton eine hohe Langlebigkeit und Witterungsbeständigkeit der Infrarot-reflektierenden Wirkung des Pflastersteins gewährleistet. Die Optik der Betonoberfläche bleibt unbeeinflusst, und durch die Verkehrsbelastung nutzt sich zwar die Vorsatzschicht ab, aber behält ihre infrarot-reflektierende Wirkung bei. Somit wird die gewünschte baubiologische Funktion des Betonprodukts über die gesamte Lebensdauer erhalten.

Da Indium einen hohen Preis aufweist und nur in geringen Mengen zur Verfügung steht, können andere vergleichbare Metallhalbleiterprodukte beispielsweise Zinnoxid FTO, Aluminiumzinkoxid AZO oder Antimonzinnoxid ATO verwendet werden. Durch die Verwendung von günstigen, bereits schon im Makrobereich eingesetzten Infrarot-reflektierenden Partikeln in nanostrukturierten Bereichen kann ein günstiges wirtschaftliches Betonprodukt bereitgestellt werden. Metallpigmente auf Aluminiumbasis weisen innerhalb der Metalle eine erhöhte Infrarotreflexion auf. Des Weiteren sind Nanopartikel aus Titandioxid, bevorzugt in Anatas- und Rutilform sehr gut geeignet, hohe Infrarotreflexionsfähigkeiten der Vorsatzschicht zu gewährleisten.

In den Figs. 2 bis 6 sind weitere Betonprodukte für verschiedene Einsatzzwecke dargestellt. So zeigt Fig. 2 einen Pultstein 20, wie er beispielsweise als Absatzstein für eine Fahrbahn- oder einen Fußgängerwegübergang dienen kann, und der auf zwei Seiten eine Deckschicht 14 aus Infrarot-reflektierendem Material um einen Kern aus Kernschichtbeton 12 aufweist.

In Fig. 3 ist ein Deckstein 30 dargestellt, wie er beispielsweise als Dachkrone oder als Mauerkrone verwendet werden kann, und der auf der Oberfläche sowie an den beiden Seitenflächen eine infrarot-reflektierende Deckschicht 14 aufweist.

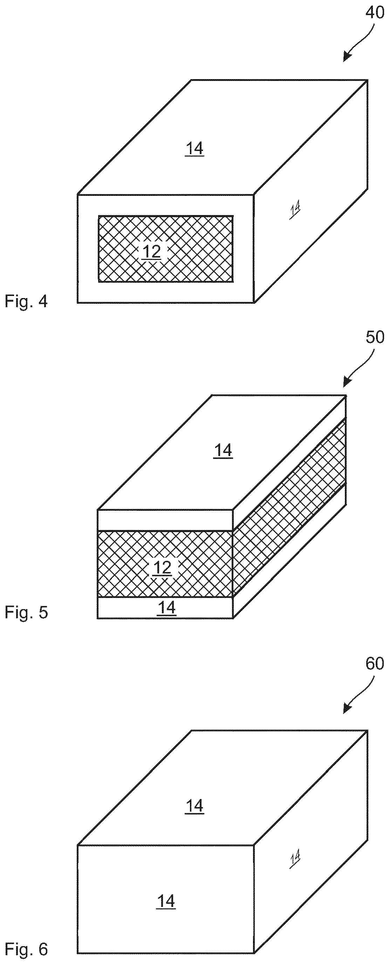

Fig. 4 zeigt einen Mantelstein 40, der beispielsweise zum Bau einer freistehende Stehle oder Steinstrebe voll ummantelt mit einer Deckschicht 14 infrarot-reflektierenden Materials umhüllt ist.

Fig. 5 zeigt einen Mauerstein 50, wie er zum Aufbau einer Einziegelmauer eingesetzt werden kann, die auf beiden Mauerseiten eine infrarot-reflektierende Beschichtung 14 trägt.

Schließlich zeigt Fig. 6 einen Vollmantelstein 60, wie er universell für alle Verwendungsarten einen Betonprodukts herangezogen werden kann.

Denkbar ist darüber hinaus der Einsatz eines Betonprodukts als Dachziegelstein, der im Wesentlichen aus einem Kernbeton besteht, und eine dünne Deckschicht mit Infrarot-eingemischten Nanopartikeln 18 enthält, durch die eine Dachfläche nur gering aufgeheizt und die Masse an Wärme wieder zurück in die Atmosphäre geworfen werden kann.

## Patentansprüche

1. Infrarot reflektierendes Betonproduktmit in der Matrix des Betons umfassten Infrarot-reflektierende Nanopartikel (18) in einem nicht sichtbaren Größenbereich kleiner 150 nm, wobei das Betonprodukt zumindest eine Deckschicht (14) aus einem Deckschichtbeton (16) und eine Kernschicht (12) aus einem Kernbeton umfasst, wobei in der Matrix des Deckschichtbetons (16) die Infrarot-reflektierenden Nanopartikel (18) umfasst sind, und der Kernbeton aus einer gewöhnlichen Zement/Gesteinskörnung/Wasser-Mischung hergestellt ist, und wobei der Deckschichtbeton (16) durch Einmischen der Nanopartikel (18) in einen Zementleim hergestellt und auf eine bereits gegossene Kernschicht (12) aufgetragen ist, und die Kernschicht (12) Volumen, Form und Stabilität des Betonprodukts bereitstellt, wobei
die Nanopartikel (18) 5 % bis 30 % Gewichtsanteil, insbesondere 8 % bis 20 % Gewichtsanteil des Deckschichtbetons (16) ausmachen, wobei zusätzliche Nanopartikel vor Aushärtung der Deckschicht (14) in die Oberfläche der Deckschicht (14) eingebracht sind, um eine erhöhte Konzentration von Nanopartikeln auf der Oberfläche und eine abnehmende Konzentration in Richtung Kernbeton vor Aushärtung der Deckschicht in die Oberfläche der Deckschicht einzubringen und eine graduelle Verteilung der Nanopartikel mit erhöhter Konzentration auf der Oberfläche und abnehmender Konzentration in Richtung Kernbeton zu erreichen, so dass die IR-reflektierende Wirkung auf der Oberfläche deutlich verbessert ist.

2. Betonprodukt nach Anspruch 1,
wobei
die Nanopartikel (18) kleiner 100 nm, insbesondere kleiner 30 nm, und im speziellen zwischen 5 bis 10 nm groß sind.

3. Betonprodukt nach Anspruch 1 oder 2,
wobei
die Nanopartikel (18) Glimmer, Metallpulverpigmente und/oder eine metallische Halbleiterverbindung, insbesondere Metall-Oxide oder Metall-Zink-Oxide umfassen.

4. Betonprodukt nach Anspruch 3,
wobei
die Nanopartikel (18) Aluminium-Partikel, Aluminiumoxid-Partikel, Titandioxid TiO₂-Partikel, bevorzugt in Anatas-, Brookit- oder Rutilform, Indium-Zinnoxid ITO-Partikel, insbesondere aluminiumdotiertes Zinnoxid-Partikel oder Zinkoxid-Partikel oder eine Mischung davon umfassen.

5. Betonprodukt nach einem der vorangegangenen Ansprüche,
wobei
ein Zementleim des Deckschichtbetons (16) zumindest teilweise Polyurethan umfasst, insbesondere vollständig aus Polyurethan besteht.

6. Betonprodukt nach einem der vorangegangenen Ansprüche,
wobei
die Nanopartikel (18) einen mehrschichtigen Aufbau aufweisen, insbesondere einen Aufbau Glimmer- Metallpulver und/oder Glimmer-Halbleiterverbindung, und bevorzugt die Nanopartikel (18) mit Aluminium oder einem anderen Metall dotiert sind.

7. Betonprodukt nach Anspruch 6,
wobei
die Nanopartikel (18) eine Beschichtung aufweisen, insbesondere eine Glimmer-, Metall- und/oder eine Oxidbeschichtung, insbesondere eine durchsichtige SiO₂-Beschichtung.

8. Betonprodukt nach einem der vorangegangenen Ansprüche,
wobei
der Deckschichtbeton (16) eine Dicke von 3 mm bis 20 mm, bevorzugt 5 mm bis 10 mm aufweist.

9. Betonprodukt nach einem der vorangegangenen Ansprüche,
wobei
die Deckschicht (14) zur Freilegung der Infrarot reflektierenden Nanopartikel (18) mechanisch nachbearbeitet, insbesondere geschliffen, gestrahlt, gefräst oder andersartig aufgeraut ist.

10. Betonprodukt nach Anspruch 9,
wobei
eine polierte Deckschichtoberfläche bereitgestellt wird.

11. Betonprodukt nach einem der vorangegangenen Ansprüche,
wobei
die Deckschicht (14) mit einer flächigen Nanobeschichtung versehen ist, die aus einer Nanostruktur besteht.

12. Verfahren zu Herstellung eines Betonprodukts nach einem der vorangegangenen Ansprüche,
wobei der Deckschichtbeton (16) durch Einmischen der Nanopartikel (18) in einen Zementleim hergestellt und auf eine bereits gegossene Kernschicht (12) aufgetragen ist, und die Kernschicht (12) im Wesentlichen Volumen, Form und Stabilität des Betonprodukts bereitstellt, wobei das Einbringen der zusätzlichen Nanopartikel vor Aushärtung der Deckschicht (14) innerhalb eines Zeitraums von Herstellen der Deckschicht (14) bis 28 Tage später erfolgt, d. h. innerhalb des Aushärtens des Zementleims, wobei die Nanopartikel mittels einer Wasser/Nanopartikelemulsion fein verteilt auf der Oberfläche der Deckschicht (14) eingebracht, d. h. unter Druck mittels einer Düse eingesprüht werden, um eine erhöhte Konzentration von Nanopartikeln vor Aushärtung der Deckschicht in die Oberfläche der Deckschicht einzubringen und eine graduelle Verteilung der Nanopartikel mit erhöhter Konzentration auf der Oberfläche und abnehmender Konzentration in Richtung Kernbeton zu erreichen, so dass die IR-reflektierende Wirkung auf der Oberfläche deutlich verbessert werden kann, wobei durch Einbringungszeitpunkt, Druckeinstellung und Nanopartikelkonzentration in der Emulsion sowohl Partikelgradient als auch Partikelmenge steuerbar ist.

13. Verfahren zur Herstellung eines Betonprodukt nach Anspruch 12,
wobei
die Wasser/Nanopartikelemulsion ein Sol-Gel ist, das weiterhin Si-, SiO- und/oder SiO₂-Partikel umfasst, so dass ein Eindringen und/oder Beschichten der Deckschicht (14) durch Quarzglaspartikel erfolgt, wobei bevorzugt das Sol-Gel 0,1% bis 10% Nanopartikel, bevorzugt 0,5% bis 5%, insbesondere 1% Nanopartikel, und 3% bis 30%, bevorzugt 5% bis 15%, insbesondere 10% Quarzglaspartikel umfasst.

14. Betonprodukt nach einem der Ansprüche 1 bis 11 oder Verfahren nach einem der Ansprüche 12 oder 13,
wobei
das Betonprodukt ein Pflasterstein (10), ein Außenfassadenstein, ein Mauerstein (50) oder ein Dachziegel ist.

## Claims

1. Infrared-reflecting concrete product with infrared-reflecting nanoparticles (18) enclosed in the matrix of the concrete in a non-visible size range smaller than 150 nm, the concrete product comprising at least one facing layer (14) made of a facing layer concrete (16) and one core layer (12) made of a core concrete, the infrared-reflecting nanoparticles (18) being enclosed in the matrix of the facing layer concrete (16), and the core concrete being manufactured from a usual cement/aggregate/water mixture, and the facing layer concrete (16) being manufactured by mixing the nanoparticles (18) into a cement paste and applied to an already poured core layer (12), and the core layer (12) providing volume, shape and stability of the concrete product, wherein
the nanoparticles (18) make up 5% to 30% percentage by weight, in particular 8% to 20% percentage by weight, of the facing layer concrete (16), additional nanoparticles are introduced into the surface of the facing layer (14) prior to hardening of said facing layer (14) in order to introduce into the surface of the facing layer an increased concentration of nanoparticles on the surface and a decreasing concentration in the direction of the core concrete prior to hardening of the facing layer and to achieve a gradual distribution of the nanoparticles with increased concentration on the surface and decreasing concentration in the direction of the core concrete, such that the IR-reflecting effect on the surface is considerably improved.

2. Concrete product according to claim 1,
wherein
the nanoparticles (18) are smaller than 100 nm, in particular smaller than 30 nm, and specifically between 5 and 10 nm in size.

3. Concrete product according to claim 1 or 2,
wherein
the nanoparticles (18) comprise mica, metal powder pigments and/or a metallic semiconductor compound, in particular metal oxides or metal-zinc oxides.

4. Concrete product according to claim 3,
wherein
the nanoparticles (18) comprise aluminium particles, aluminium oxide particles, titanium dioxide (TiO₂) particles, preferably in anatase, brookite or rutile form, indium tin oxide (ITO) particles, in particular aluminium-doped tin oxide particles or zinc oxide particles or a mixture thereof.

5. Concrete product according to one of the preceding claims,
wherein
a cement paste of the facing layer concrete (16) comprises at least partially polyurethane, in particular consists completely of polyurethane.

6. Concrete product according to one of the preceding claims,
wherein
the nanoparticles (18) have a multi-layer structure, in particular a structure of mica-metal powder and/or mica-semiconductor compound, and the nanoparticles (18) are preferably doped with aluminium or another metal.

7. Concrete product according to claim 6,
wherein
the nanoparticles (18) have a coating, in particular a mica, metal and/or an oxide coating, in particular a transparent SiO₂ coating.

8. Concrete product according to one of the preceding claims,
wherein
the facing layer concrete (16) has a thickness of 3 mm to 20 mm, preferably 5 mm to 10 mm.

9. Concrete product according to one of the preceding claims,
wherein
the facing layer (14) is mechanically finished, in particular sanded, blasted, milled or otherwise roughened, to expose the infrared-reflecting nanoparticles (18).

10. Concrete product according to claim 9,
wherein
a polished facing layer surface is provided.

11. Concrete product according to one of the preceding claims,
wherein
the facing layer (14) is provided with a flat nano coating consisting of a nanostructure.

12. Method for manufacturing a concrete product according to one of the preceding claims,
wherein the facing layer concrete (16) is manufactured by mixing the nanoparticles (18) into a cement paste and applied to an already poured core layer (12) and the core layer (12) substantially provides volume, shape and stability of the concrete product, the introduction of the additional nanoparticles takes place prior to hardening of the facing layer (14) within a period of up to 28 days later for manufacturing the facing layer (14), i.e. during hardening of the cement paste, the nanoparticles are introduced by means of a water/nanoparticle emulsion finely distributed on the surface of the facing layer (14), i.e. sprayed in under pressure by means of a nozzle, in order to introduce into the surface of the facing layer an increased concentration of nanoparticles prior to hardening of the facing layer and to achieve a gradual distribution of the nanoparticles with increased concentration on the surface and decreasing concentration in the direction of the core concrete, such that the IR-reflecting effect on the surface can be considerably improved, and both particle gradient and particle quantity are controllable by the time of introduction, pressure setting and nanoparticle concentration in the emulsion.

13. Method for manufacturing a concrete product according to claim 12,
wherein
the water/nanoparticle emulsion is a sol-gel that furthermore comprises Si, SiO and/or SiO₂ particles, such that a penetration and/or coating of the facing layer (14) by quartz glass particles takes place, and the sol-gel preferably comprises 0.1% to 10% nanoparticles, preferably 0.5% to 5%, in particular 1% nanoparticles, and 3% to 30%, preferably 5% to 15%, in particular 10% quartz glass particles.

14. Concrete product according to one of claims 1 to 11 or method according to one of claims 12 or 13,
wherein
the concrete product is a paving stone (10), an exterior facade stone, a masonry block (50) or a roof tile.

## Revendications

1. Produit en béton réfléchissant les infrarouges avec des nanoparticules (18) réfléchissant les infrarouges incorporées dans la matrice du béton, appartenant à une plage de dimensions inférieure à 150 nm, sachant que le produit en béton comprend au moins une couche de parement (14) constituée d'un béton de parement (16) et d'une couche principale (12) constituée d'un béton à forte granulométrie, sachant que sont comprises dans la matrice du béton de parement (16) les nanoparticules (18) réfléchissant les infrarouges, et que le béton à forte granulométrie est fabriqué à partir d'un mélange conventionnel de ciment/granulats/eau, et sachant que le béton de parement (16) est fabriqué en mélangeant les nanoparticules (18) à une pâte de ciment et qu'il est enduit sur une couche principale (12) déjà coulée, et que la couche principale (12) fournit le volume, la forme et la stabilité du produit en béton, sachant que les nanoparticules (18) représentent 5% à 30% du pourcentage en poids, notamment 8 % à 20 % du pourcentage en poids du béton de parement (16), sachant que des nanoparticules supplémentaires sont incorporées dans la surface de la couche de parement (14) avant le durcissement de la couche de parement (14) pour, avant le durcissement de la couche de parement, doter la surface de la couche de parement d'une concentration accrue de nanoparticules en surface et d'une concentration décroissante en direction du béton principal et atteindre une répartition graduelle des nanoparticules avec une concentration accrue en surface et une concentration décroissante en direction du béton principal de manière à ce que l'effet de réflexion des infrarouges soit considérablement amélioré en surface.

2. Produit en béton selon la revendication 1,
sachant
que les nanoparticules (18) sont inférieures à 100 nm, notamment inférieures à 30 nm, et soient comprises spécifiquement entre 5 et 10 nm.

3. Produit en béton selon la revendication 1 ou 2,
sachant
que les nanoparticules (18) comprennent du mica, des pigments de poudre de métal et/ou un composé semi-conducteur métallique, notamment des oxydes de métal ou des oxydes de métal-zinc.

4. Produit en béton selon la revendication 3,
sachant
que les nanoparticules (18) comprennent des particules d'aluminium, d'oxyde d'aluminium, de dioxyde de titane TiO₂, de préférence sous forme d'anatase, de brookite ou de rutile, d'oxyde d'indium-étain, notamment des particules d'oxyde d'étain dopées à l'aluminium ou des particules d'oxyde de zinc ou un mélange de celles-ci.

5. Produit en béton selon une des revendications précédentes,
sachant
qu'une pâte de ciment du béton de parement (16) comprend au moins partiellement du polyuréthane, est constituée notamment entièrement de polyuréthane.

6. Produit en béton selon une des revendications précédentes,
sachant
que les nanoparticules (18) présentent une structure multicouche, notamment une structure mica-poudre de métal et/ou un composé mica-semi-conducteur, et que, de préférence, les nanoparticules (18) sont dopées à l'aluminium ou à un autre métal.

7. Produit en béton selon la revendication 6,
sachant
que les nanoparticules (18) présentent un revêtement, notamment un revêtement en mica, métal et/ou oxyde, notamment un revêtement SiO₂ transparent.

8. Produit en béton selon une des revendications précédentes,
sachant
que le béton de parement (16) présente une épaisseur comprise entre 3 mm et 20 mm, de préférence entre 5 mm et 10 mm.

9. Produit en béton selon une des revendications précédentes,
sachant
que la couche de parement (14) subit un traitement ultérieur mécanique, notamment est meulée, irradiée, fraisée ou grattée de toute autre manière, pour mettre à découvert les nanoparticules réfléchissant les infrarouges (18).

10. Produit en béton selon la revendication 9
sachant
qu'est fournie une surface polie de la couche de parement.

11. Produit en béton selon une des revendications précédentes,
sachant
que la couche de parement (14) est dotée d'un nanorevêtement étendu sur la surface, constitué d'une nanostructure.

12. Procédé de fabrication d'un produit en béton selon une des revendications précédentes,
sachant que le béton de parement (16) est fabriqué en mélangeant les nanoparticules (18) à une pâte de ciment et qu'il est enduit sur une couche principale (12) déjà coulée, et que la couche principale (12) fournit essentiellement le volume, la forme et la stabilité du produit en béton, sachant que l'ajout des nanoparticules supplémentaires a lieu avant le durcissement de la couche de parement (14), dans un intervalle de temps allant de la fabrication de la couche de parement (14) jusqu'à 28 jours plus tard, c.-à-d. pendant le durcissement de la pâte de ciment, sachant que les nanoparticules sont appliquées de manière à être finement réparties sur la surface de la couche de parement (14), au moyen d'une émulsion eau/nanoparticules, c.-à-d. pulvérisées sous pression au moyen d'une buse pour doter la surface de la couche de parement d'une concentration accrue de nanoparticules en surface avant le durcissement et atteindre une répartition graduelle des nanoparticules avec une concentration accrue en surface et une concentration décroissante en direction du béton principal de manière à ce que l'effet de réflexion des infrarouges peut être considérablement amélioré en surface, sachant que le gradient et la quantité de particules peuvent être influencés par le moment de l'application, le réglage de la pression et la concentration de nanoparticules dans l'émulsion.

13. Procédé de fabrication d'un produit en béton selon la revendication 12,
sachant
que l'émulsion eau/nanoparticules est un gel Sol qui comprend également des particules Si, SiO et/ou SiO₂ de manière à ce que des particules de verre de quartz pénètrent dans et/ou revêtent la couche de parement (14), sachant que de préférence le gel Sol comprend 0,1 % à 10 % de nanoparticules, de préférence 0,5 % à 5 %, notamment 1 % de nanoparticules, et entre 3 % et 30 %, de préférence entre 5 % et 15 %, notamment 10 % de particules de verre de quartz.

14. Produit en béton selon une des revendications 1 à 11 ou procédé selon une des revendications 12 ou 13,
sachant que
le produit en béton est un pavé (10), une pierre de façade extérieure, une pierre à bâtir (50) ou une tuile.
